# EUROPEAN PATENT APPLICATION

(11) **EP 1 275 490 A2**
(43) Date of publication of application: **15.01.2003**
(21) Application number: 02425441.9
(22) Date of filing: 05.07.2002
(51) Int. Cl.: B29C 70/52, B63H 9/06

(54) **A forming process for pultruded section members in particular for production of reinforcing elements for sails and the like**

(30) Priority: 13.07.2001 IT MI20011500
(71) Applicant: Top Glass S.p.A., 20096 Pioltello, Milano (IT)
(72) Inventor: Branca, Alfonso, 20145 Milano (IT)
(74) Representative: Tansini, Elio Fabrizio

(57) **Abstract**

It is disclosed a forming process for pultruded section members of composite material adapted for use such as reinforcing ribs for sails. A thermoplastic resin (6) containing reinforcing fibres (1) is continuously pultruded through an appropriate pultrusion station (8) and consolidated to obtain a continuous section member (11). Subsequently, this semifinished product (11) is transversely cut and deformed by hot-pressing by an appropriate mould or press (15). Advantageously, the section member (11) is made of tubular shape and deformed so as to obtain a tapered longitudinal shape.

## Description

The present invention relates to a forming process for section members made of a composite material and obtained by pultrusion.

More specifically, the method is particularly adapted for producing reinforcing elements or ribs for boat sails and the like, as well as for the manufacture of ski sticks or handles for implements such as brooms and the like.

It is known that semifinished products made of plastic material and reinforced with fibres such as fibreglass, carbon fibres and others for the most varied uses in the different production sectors have recently had an increasingly wider spread.

Production of section members of composite material is now obtained following different technologies, one of which, i.e. pultrusion, has imposed itself and found wide use in recent years.

The semifinished product obtained by pultrusion appears as made up of a matrix of plastic material in which a mechanically resistant structure is buried which is generally formed of continuous fibres, mat, fabric, rowing of material having good mechanical features.

In particular, in the pultrusion process fibres are continuously unwound from a supply station and brought to one or more tanks containing a plastic resin. The fibres are then plunged into the tanks to be impregnated with said resin. Subsequently, the soaked fibres are brought to one or more adjustment stations where they are wrung out by appropriate rollers for example, for the purpose of adjusting the resin amount soaking the fibres and constituting the plastic matrix of the section member.

At this point, the fibres are passed through a forming station adapted to define the outline generally of constant section of the semifinished product. In more detail, the soaked fibres are pulled through a pultrusion port or head, the shape of which is established based on the shape to be given to the section member. For example, if section members of constant section having a tubular conformation are wished to be made, a pultrusion head consisting of a suitably sized opening having an annular extension is arranged. Generally, at the forming station a polymerizing agent is also arranged to enable solidification of the resin that in the soaking tanks was in a liquid state.

Thus, during this step a continuous semifinished product of constant section is obtained which has a stiff structure or at all events a structural stability.

Finally, the continuous semifinished product is transversely cut to obtain a plurality of discrete section members of a predetermined length.

Obviously a further working or finishing step may be also provided in which the semifinished product is further surface-worked, for material removal for example, or it is submitted to appropriate modifications to enable the engagement structures adapted for connection with other section members to be defined.

It should be noted that, taking into account the necessary viscosity features to obtain an optimal soaking and consequently a finished product of good quality, the suitable resins hitherto utilized in a pultrusion process are thermosetting resins: in fact, the thermosetting materials can be brought to the fluid state and are characterized by a low viscosity and therefore have the advantage of homogeneously soaking the fibres.

However, thermosetting materials have an important drawback, i.e. they cannot be deformed once they have been polymerized.

In fact, due to the physico-chemical nature of these materials, once the resin has been polymerized, it is impossible to bring it back either to the liquid state or to the plastic state in order to enable the previously made semifinished product to be deformed after pultrusion has been carried out.

In other words, the matrix of the manufactured article, due to the action of colours and/or catalysts and/or reactive hardening agents and/or radiations, is submitted to a cross-linking reaction bringing the liquid resin to a hardened state in an irreversible manner, in which the thermosetting material cannot be softened any longer by thermal effect.

Under this situation, it is therefore impossible to give the pultruded section member a particular shape by permanent set or plastic deformation, once the same has been polymerized.

Consequently, if a section member of an unconstant section is wished to be made, it has to be submitted to additional working steps such as milling or turning or at all events to material-removal operations that due to their own nature involve structural weakening above all in a composite material, and consequently give rise to loss of the mechanical features due to fraying of the fibres buried in the thermosetting resin, for example. As a result, the additional working steps to which the semifinished product must be necessarily submitted also bring about an important increase in the production costs of the finished section member.

The problem resulting from the impossibility of the pultruded section member being thermoformed by moulding is particularly felt in different sectors and above all when reinforcing ribs for boat sails and the like are to be produced.

In fact, in the nautical sector use of reinforcing elements or ribs is known which are associated with the boat sails through appropriate housings to enable maintenance of a given optimal sail geometry.

In particular the above mentioned ribs are fitted in housings or pockets formed in the sails in such a manner that they are disposed spaced apart from and parallel to each other and generally, although not necessary, lying in a horizontal plane under normal use conditions of the sail.

The ribs thus fitted and made integral with the sail structure (generally connected to the sail itself so that they are precompressed and take a slightly curved course) allow the desired geometry adapted to improve the boat performance and aerodynamic properties, to be maintained.

It is also apparent that these ribs also allow the sail structure to be stiffened and strengthened.

It will be also recognized that the ribs associated with the sails are submitted, under use conditions, to great efforts that are directly transmitted by the wind to the sail and therefore the ribs.

On the other hand, as a result of use of the sail by itself, following reversal of the sail surface designed to receive the wind push, but also following sudden gusts or in the presence of strong stresses, the precompressed ribs curved in a predetermined direction can be submitted to such forces that a sudden reversal of the axis bending is caused. Bending reversal obviously involves inner efforts in the reinforcing ribs that can even give rise to breaking of the ribs themselves.

It is therefore apparent that sail ribs must possess important features of mechanical resistance to efforts obviously combined with the necessary requisites of light weight.

Under this situation use of reinforcing ribs made of composite material appeared to be optimal.

It is clear that the present extrusion and/or pultrusion processes of composite materials enable section members provided with a constant section to be substantially obtained.

Recently however there has been a greatly felt need for adjustment of the resilient properties of the ribs associated with the sails along their longitudinal extension.

In particular there is a need for different bending stiffnesses of the reinforcing elements at different distances from the mast supporting the sail itself.

The pultrusion processes have not hitherto allowed ribs meeting the most recent requirements to be obtained.

Under this situation, it is a fundamental aim of the present invention to provide a forming process for pultruded section members made of a composite material which is adapted to overcome the mentioned drawbacks.

In particular, it is an aim of the present invention to provide a process enabling section members to be formed that can be deformed after pultrusion has been carried out.

In more detail, it is an aim of the present invention to provide a process for making pultruded section members of varying sections along their longitudinal extension without however damaging the fibres buried in the plastic resin and therefore maintaining the mechanical properties of the composite material unimpaired.

It is a further aim to provide a process enabling section members to be produced by pultrusion and possibly a finished product to be obtained which has a matrix of plastic resin having the physico-chemical features of a thermosetting resin.

Finally, another important aim of the invention is to provide a process for making reinforcing ribs for sails in which the ribs have a tubular section and a tapered longitudinal conformation, i.e different resilient properties along the axial extension of the section member.

Description of a preferred but not exclusive embodiment of a forming process for pultruded section members of composite material in particular for obtaining reinforcing elements for sails is now given hereinafter, in accordance with the present invention.

The following description will be taken with reference to the accompanying drawings, given by way of non-limiting example, in which:
- Fig. 1 diagrammatically shows a production line by way of example for forming section members in accordance with the present invention;
- Fig. 2 is a partly sectioned perspective view of a possible mould or press, diagrammatically shown in Fig. 1, and adapted for use in accordance with the invention;
- Fig. 3 is a perspective view of a possible section member (or a possible reinforcing element) obtained in accordance with the invention;
- Figs. 4 and 5 are cross-sectional views of the section member in Fig. 3 taken along planes IV-IV and V-V; and
- Fig. 6 is a diagrammatic view showing how reinforcing ribs can be possibly positioned within the sail body.

In accordance with the process of the invention, first arrangement of a predetermined number of continuous reinforcing fibres 1 in a feeding station 2 is provided.

From a structural point of view, fibres 1 are made up of a glass fibre, aramidic fibre, carbon fibre or still others. It is to be noted that fibres 1 could also possibly comprise a combination of parallel continuous fibres made of different materials, thermoplastic fibres for example.

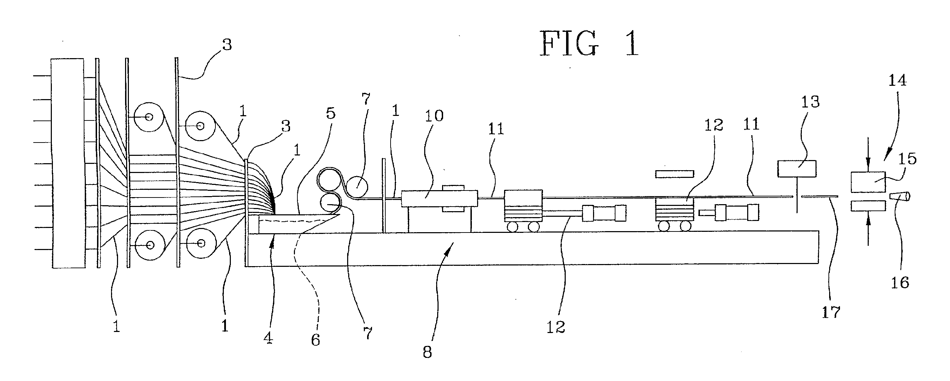

Looking at Fig. 1 it is possible to see that the filaments are unwound in a continuous manner from a supply station 2 and fed to one or more possible guide devices or grids. Guides 3 are arranged to guide fibre 1 to a soaking station 4.

The soaking station 4 consists of one or more tanks 5, for example, which contain a plastic resin in a liquid state 6 that advantageously will be identified by a resin having a thermoplastic behaviour. Fibres 1 are therefore suitably guided so as to be plunged into said tank 5 to be impregnated with the thermoplastic resin 6.

Subsequently, the soaked fibres 1 are passed through a resin-adjusting station (wringing rollers 7, for example) that, by pressing the soaked fibres, adjust the resin amount 6 that impregnates them and will constitute the plastic matrix of the section member.

Advantageously and in a preferential manner (as shown in Fig. 1), several rollers 7 may be provided which are disposed close to each other so that the soaked fibre 1 is pressed several times.

After the wringing steps, the soaked fibre 1 is preformed in a pultrusion station 8. In detail, the resin 6 containing fibres 1 is passed through a pultrusion head or die having a port adapted to give the resin-fibre assembly the desired outline.

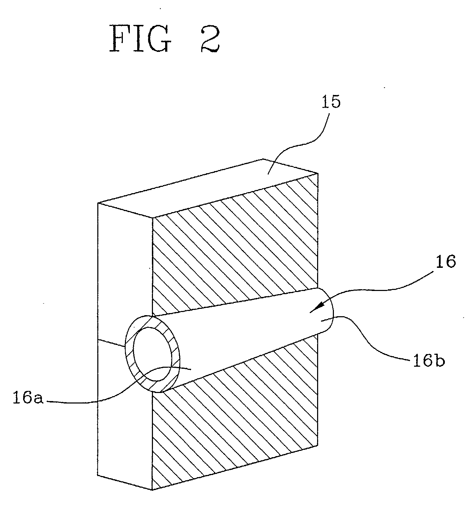

For example, if a section member the section of which has a tubular extension (of the type shown by way of example in Fig. 2) is wished to be manufactured, the resin 6 containing fibres 1 is pulled through a pultrusion head provided with a port of annular shape having the appropriate sizes.

At the pultrusion head or immediately downstream thereof cooling means preferably operates, said means consisting for example of lamps or other devices causing solidification or consolidation of the thermoplastic resin 6 containing fibres 1 so that it reaches a rigid or semi-rigid structure, i.e. provided with a structural stability enabling a continuous pultruded semifinished section member 11 to be obtained.

The semifinished product or workpiece 11 is moved by one or more driving units 12 of known type and therefore not further described, that are arranged downstream of the cooling means 10. The driving units 12 are designed to move the continuous workpiece 11 to a cutting station 13.

The workpiece 11 is then transversely cut in the cutting station 13 to obtain a plurality of discrete section members 17 of a predetermined length.

Subsequently, each section member 17 is deformed by moulding at a forming station 14.

Alternatively, the step of deforming the workpiece 11 by moulding can also be carried out prior to the transverse cutting step. In this case the forming station 14 will be put immediately downstream of the driving units 12 and the workpiece 11 will be continuously deformed.

In particular, the forming station 14 consists of a mould or press 15 (better shown in Fig. 2) arranged to squeeze the workpiece and give it the appropriate conformation depending on the intended shape to be obtained.

In more detail and as shown in the accompanying figures, if a tapered tubular section member 16 is wished to be obtained, the thermoplastic resin 6 containing fibre 1 is preformed so as to obtain a pultruded workpiece 11 of tubular extension having a constant section.

Subsequently, each tubular section member 17 obtained in the transverse cutting step is introduced into the mould or press 15 that will deform at least one portion of the section member 17 itself.

In more detail, the mould or press 15 squeezes the section member 17 from one end 16b to the other 16a so as to continuously vary the cross section of same along its extension axis.

As shown in Fig. 2, mould 15 can have inner surfaces suitably conforming in shape to the tapered tubular section member 16 that is wished to be obtained and it can squeeze either the end 16a alone of the section member 17 and the region close to this end or the whole body along its longitudinal extension.

Preferably, said forming step is carried out by heat (thermoforming) to bring the workpiece 17 from a rigid-structure condition to a plastic condition and therefore facilitate deformation thereof. Advantageously (but not necessarily), under this situation the mould or press 15 is also arranged to directly heat the workpiece 17 to allow forming of same.

In other words, it will be understood that the possibility of deforming the workpiece, after the pultrusion process, by moulding or pressing substantially results from the presence of a matrix of thermoplastic material.

It is also well apparent that the above described process can be in particular carried out for manufacturing reinforcing elements or ribs to be used in boat sails.

In this case in fact a section member of constant tubular section having the appropriate sizes is arranged which is subsequently submitted to the above described steps carrying out deformation by moulding.

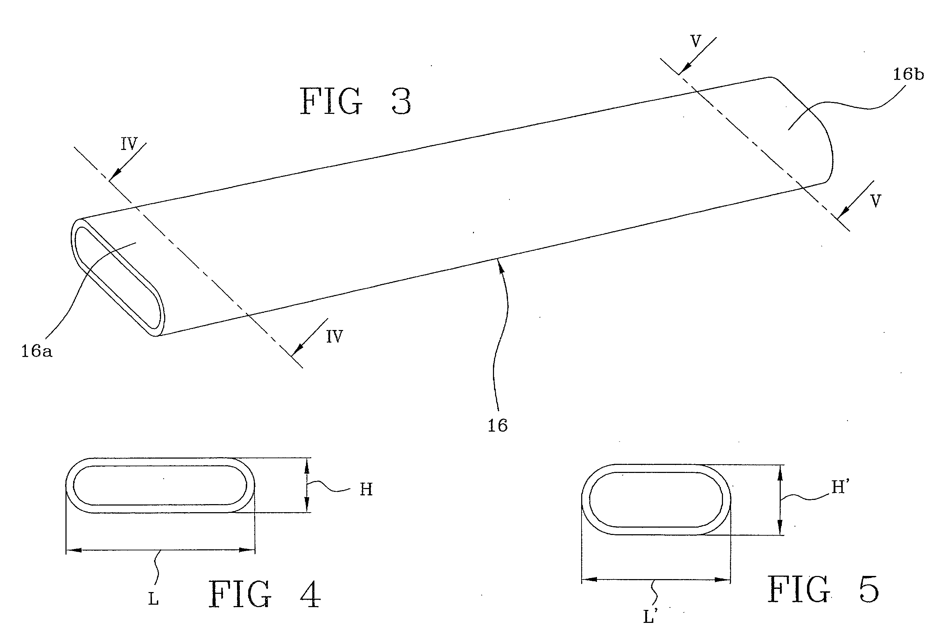

In particular provision can be made for a mould or press of such a conformation as to enable the tubular section member to be progressively crushed or flattened along its axis to obtain a rib of the type shown in Fig. 3.

As can be viewed from the sections reproduced in Figs. 4 and 5 concerning the opposite ends of a rib, said rib has a first end of a flattened section (Fig. 4) as a result of a greater crushing action carried out by the mould or press.

On the contrary, at the other end it will have an unchanged section with respect to the original shape or at all events a less deformed end as compared with the section at the opposite end (Fig. 5). More specifically, the two sections will differ in their sizes identified by references 1, 1', h and h'.

In particular, as sections in Figs. 4 and 5 show, the end that has been submitted to more marked deformations will have a high ratio between sizes 1 and h; vice versa the section submitted to less deformation will have a smaller size ratio.

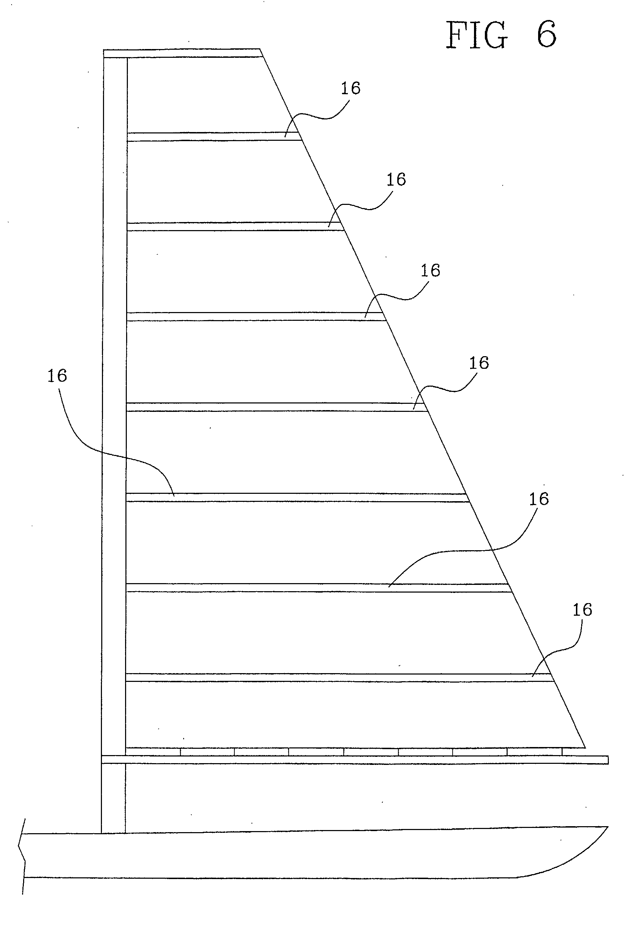

Shown in a very diagrammatic form in Fig. 6 is a sail for a boat incorporating a given number of reinforcing elements or ribs that are all disposed parallel to each other and lie in a substantially horizontal plane in a condition of normal use of the sail.

The ribs obtained in accordance with the previously described method obviously have differentiated resilient properties along the axis of the article of manufacture exactly due to the section variations of the reinforcing element along its extension.

The process in accordance with the invention is also advantageous for manufacturing ski sticks and handles for implements such as brooms and the like.

It will be understood that the thermoplastic resin constituting the section member to be deformed can be selected from resins adapted to be cross-linked, i.e. to take, by cross-linking, the structure and behaviour of a thermosetting resin.

If resins of this type are chosen, i.e. cross-linkable thermoplastic resins, such as novolac phenolic resins, a cross-linking step may be provided to turn the matrices of thermoplastic resin of the ribs into corresponding matrices of thermosetting resin.

Taking into account the nature of the above described forming process, it is apparent that the cross-linking step will be carried out only after occurrence of the temperature-rising step and the deformation step by moulding of the pultruded workpiece.

From a practical point of view the cross-linking step of the thermoplastic resin forming the matrix of the reinforcing element may take place as well by temperature rising to a higher temperature than the required temperature to bring the thermoplastic matrix to the plastic or fluid phase.

It may be also provided that an appropriate cross-linking agent may be associated with the plastic resin of the thermoplastic type, which agent is able to intervene in order to give rise to cross-linking to the higher temperature so that by progressive thermal increase, passage to the fluid/plastic state of the thermoplastic resin necessary for carrying out the deformation by moulding may be obtained, as well as the subsequent cross-linking bringing the resin to the state of a thermosetting resin.

The present invention achieves important advantages.

First of all it should be noted that by utilizing the thermoplastic properties of the pultruded section member a deforming process by moulding has been made available which is particularly used for obtaining reinforcing elements associable with boat sails, which process is very efficient, of easy implementation and adapted to produce articles of manufacture of high mechanical properties, very light weight and low cost.

It will be also appreciated that the process of the invention possibly allows finished products to be obtained starting from pultruded section members having matrices of thermosetting plastic resin without on the other hand having the typical drawbacks resulting from the impossibility of deforming section members by moulding which have a matrix of thermosetting plastic resin.

From the point of view of the quality of the obtained product, it is possible to obtain reinforcing elements for sails having a varying section along the extension axis of the section member, which elements on the other hand offer very high mechanical performance particularly adapted for such a use.

It should be also recognized, still as regards the quality of the obtained product, that the reinforcing element can be obtained without creating any structural discontinuity, weakening or other working, keeping the fibres oriented in preferential directions and also avoiding any type of unaesthetic appearance.

## Claims

1. A forming process for section members of composite material, in particular for production of reinforcing elements or ribs for sails, ski sticks, implement handles or the like, comprising the steps of:
- unwinding a predetermined continuous fibre (1);
- soaking said fibre (1) in a plastic resin (6) having a thermoplastic behaviour;
- preforming said thermoplastic resin (6) containing the fibre (1) by pultrusion; and
- consolidating the thermoplastic resin (6) containing said fibre (1) to obtain a continuous pultruded section member (11);
**characterized in that** it further comprises a step of deforming said pultruded section member by moulding.

2. A process as claimed in claim 1, **characterized in that** said step of deforming the section member by moulding is carried out through hot deformation of said pultruded section member.

3. A process as claimed in anyone of the preceding claims, **characterized in that** said step of deforming the section member by moulding is carried out by appropriate compression of the section member by means of an appropriate mould or shaping press (15).

4. A process as claimed in anyone of the preceding claims, **characterized in that** said step of preforming the thermoplastic resin (6) containing said fibre (1) by pultrusion is carried out so as to obtain a continuous pultruded section member (11) of tubular section.

5. A process as claimed in anyone of the preceding claims **characterized in that** said step of deforming said pultruded section member by moulding comprises the step of deforming at least one portion of said section member to obtain a section member of varying transverse section along its extension.

6. A process as claimed in claim 4, **characterized in that** said step of deforming the section member is obtained by progressive squeezing of said tubular section member from one end to the other by an appropriate mould or press (15) to obtain a tubular section member of tapered longitudinal shape (16).

7. A process as claimed in anyone of the preceding claims, **characterized in that** it comprises a step of cross-linking the plastic resin (6) to turn the section member having a thermoplastic behaviour into a section member having a thermosetting behaviour, said cross-linking step being preferably carried out by activation of a catalyst to convert the thermoplastic semifinished product into a thermosetting semifinished product.

8. A process to make reinforcing ribs for sails, ski sticks and handles for implements such as brooms and the like as claimed in anyone of the preceding claims, comprising the steps of:
- unwinding a predetermined continuous fibre (1);
- soaking said fibre in a plastic resin (6) having a thermoplastic behaviour;
- preforming said thermoplastic resin (6) containing the fibre (1) by pultrusion to obtain a substantially tubular continuous section member (11); and
- consolidating the thermoplastic resin (6) containing said fibre (1);
- preferably transversely cutting said continuous tubular section member (11) to obtain at least one tubular section member of predetermined length (16);
**characterized in that** it further comprises a step of deforming at least one portion of said tubular section member (16) by hot-moulding or hot-pressing to obtain a reinforcing rib for sails of tapered longitudinal shape.

9. A process as claimed in claim 8, **characterized in that** it comprises a step of cross-linking the plastic resin (6) to convert the reinforcing element having a matrix of thermoplastic behaviour into a reinforcing element having a matrix of thermosetting behaviour.

10. A rib for sails, ski sticks, handles for implements such as brooms and the like obtained by the process as claimed in claim 1.
